# EUROPÄISCHE PATENTSCHRIFT

(11) **EP 1 634 799 B1**
(45) Veröffentlichungstag und Bekanntmachung des Hinweises auf die Patenterteilung: **19.01.2011**
(21) Anmeldenummer: 05019622.9
(22) Anmeldetag: 09.09.2005
(51) Int. Cl.: B62D 25/04, B62D 25/14

(54) **Säulenanordnung für ein Kraftfahrzeug**
Pillar assembly for motor vehicle
Ensemble de montant pour véhicule automobile

(30) Priorität: 09.09.2004 DE 102004044019
(43) Veröffentlichungstag der Anmeldung: 15.03.2006
(73) Patentinhaber: Wilhelm Karmann GmbH, 49084 Osnabrück (DE)
(72) Erfinder: Weiss, Lorenz, 49076 Osnabrück (DE); Schulz, Robert, 49090 Osnabrück (DE)
(74) Vertreter: Kronthaler, Schmidt & Coll.

(56) Entgegenhaltungen:
- WO-A-92/11164
- DE-A1- 10 256 608
- DE-A1- 19 519 354
- JP-A- 5 162 671

## Beschreibung

Die Erfindung betrifft eine Säulenanordnung für ein Kraftfahrzeug.

Ein Karosserierahmen für Kraftfahrzeuge umfaßt in der Regel vertikal verlaufende Säulen. Bei Personenkraftwagen sind dies insbesondere eine A-, B-, C- oder D-Säule.

Aus der DE 196 48 495 A1 ist eine B-Säule bekannt, die in vertikaler Richtung in zwei Abschnitte unterteilt ist. Ein erster Abschnitt der Säule wird bei der Herstellung eines Karosserierahmens des Kraftfahrzeuges auf einem Längsträger desselben angeordnet und der zweite Abschnitt wird an einer Seitenfläche desselben Längsträgers angeordnet.

Aus der DE 102 56 608 A1 ist eine B-Säule bekannt, in der zwei Ausnehmungen gebildet sind, durch die ein Längsträger geführt ist.

Ein Nachteil derartiger Säulen ist, daß keine geschlossenen Profile verwendet werden, wodurch sich die Steifigkeit des Kraftfahrzeuges verschlechtert.

Ein weiterer Nachteil derartiger Säulen ist, daß diese sehr aufwendig gefügt werden müssen.

Werden Träger durch eine Säule gesteckt, so ergibt sich der Nachteil, daß diese keine oder keine optimale Verbindung mit der Säule aufweisen.

Aufgabe der Erfindung ist es, eine Verbindung zwischen einem Träger und einer Säule zu schaffen, die die zuvor genannten Nachteile mindestens teilweise überwindet.

Diese Aufgabe wird erfindungsgemäß gelöst durch eine Säulenanordnung gemäß anspruch 1.

Die Säulenabschnitte können Abschnitte einer A-, B-, C- oder D-Säule sein.

Der Träger kann ein Querträger sein, d. h. ein Träger, der im wesentlichen senkrecht zu einer Fahrtrichtung des Kraftfahrzeuges verläuft.

Ein derartiger Träger kann als Seitenaufprallträger ausgebildet sein. In dieser Variante erstreckt sich der Seitenaufprallträger vorteilhaft über die Säulenabschnitte hinaus, d. h. er erstreckt sich senkrecht zu einer Fahrtrichtung des Kraftfahrzeuges (aus einem Kraftfahrzeuginneren kommend) über die Säulenabschnitte hinaus in Richtung einer Knautschzone des Kraftfahrzeuges.

Ferner kann der Träger ein Längsträger sein, d. h. ein Träger, der im wesentlichen parallel zur Fahrtrichtung des Kraftfahrzeuges verläuft.

Die Säulenabschnitte und/oder die Träger können aus einem Profil gebildet sein, insbesondere aus einem geschlossenen Profil, welches vorteilhaft einen eckigen Querschnitt aufweist. Das geschlossene Profil kann durch ein Innenhochdruckumformverfahren, ein Rollprofilverfahren oder ein Strangpreßprofilverfahren hergestellt sein.

Die Säulenabschnitte und/oder der Träger können aus einem Material gebildet sein, das Stahl und/oder Aluminium und/oder Magnesium und/oder AFS (Aluminium Foam Sandwich) umfaßt.

Der obere und/oder untere Säulenabschnitt können mit dem Verbindungsstück des Trägers über eine Schweißverbindung, insbesondere eine Laserschweißverbindung, verbunden sein. Alternativ kann eine Verbindung mittels einer Lötverbindung hergestellt sein.

Eine erfindungsgemäße Säulenanordnung kann Teil eines Karosserierahmens eines beliebigen Kraftfahrzeuges, wie z.B. eines Lastkraftwagens, eines Transporters oder eines Personenkraftwagens, sein. Bevorzugt wird die Säulenanordnung in einem Cabrioletfahrzeug oder einem zweisitzigen Kraftfahrzeug verwendet.

Die Erfindung wird nachfolgend anhand eines Ausführungsbeispiels unter Bezugnahme auf eine Zeichnung beschrieben. Es zeigen:
- Fig. 1: eine Explosionsansicht einer erfindungsgemä- ßen Säulenanordnung,
- Fig. 2: einen Ausschnitt einer zusammengefügten Säu- lenanordnung entsprechend der vorliegenden Erfindung, die aus den in Fig. 1 gezeigten Komponenten gefügt wurde,
- Fig. 3: eine vergrößerte Ansicht einer Verbindung zwischen einem Säulenabschnitt und einem Trä- ger und
- Fig. 4: eine perspektivische Ansicht eines Teiles eines Karosserierahmens, der die erfindungs- gemäße Säulenanordnung umfaßt.

Grundsätzlich sind verschiedene Ausführungen der erfindungsgemäßen Säulenanordnung denkbar. Im folgenden wird eine bevorzugte Ausführungsform beschrieben.

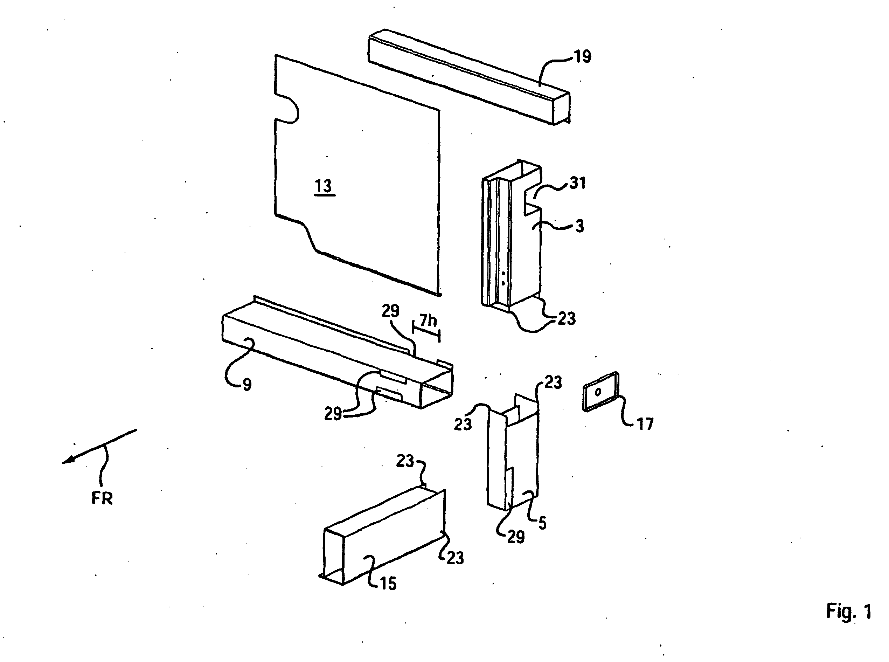

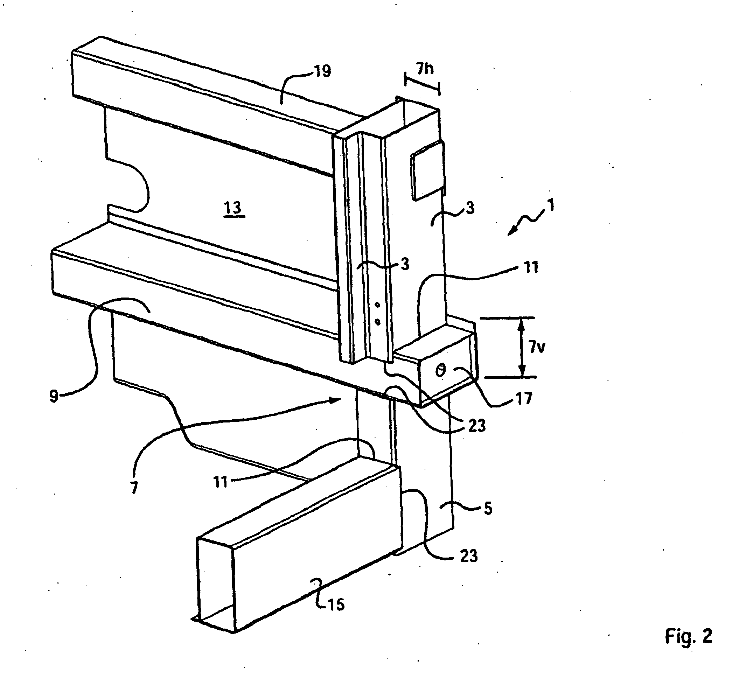

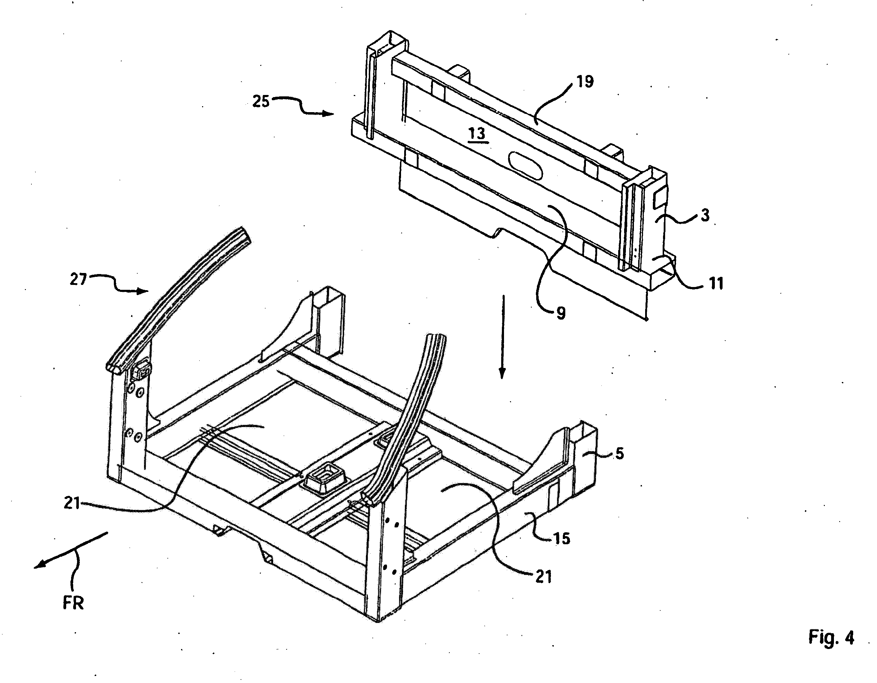

In Fig. 1 sind Bauteile eines Rückwandmoduls 25 und eines Fahrgastmoduls 27, die in Fig. 4 dargestellt sind, gezeigt, die zu einer Säulenanordnung 1, die in Fig. 2 gezeigt ist, zusammengefügt werden, wie folgend beschrieben werden wird.

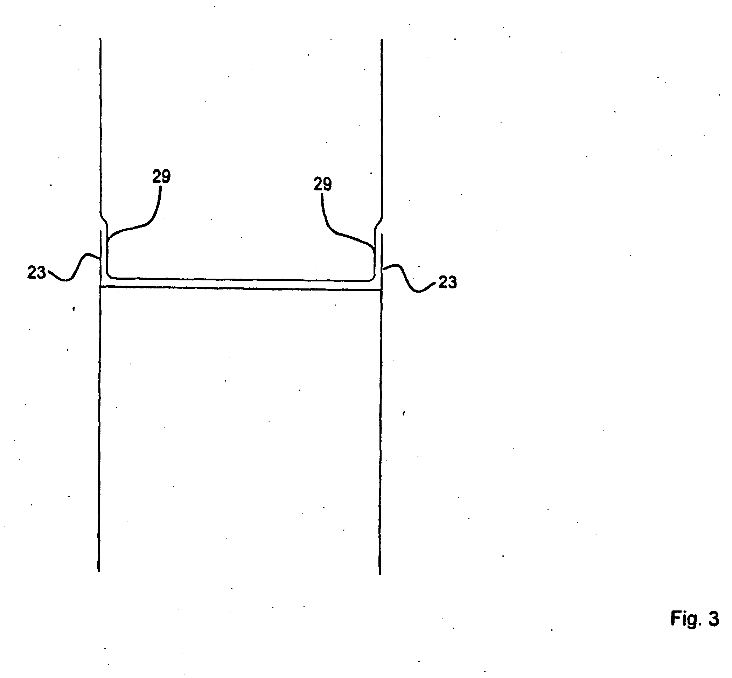

Das Fahrgastmodul 27, in dem ein Fahrgastraum 21 gebildet ist, umfaßt einen unteren Säulenabschnitt 5 und einen Längsträger 15. Um das Fahrgastmodul 27 herzustellen, wird der untere Säulenabschnitt 5 aus der in Fig. 1 gezeigten Stellung solange entlang einer Fahrtrichtung FR des Kraftfahrzeuges auf ein Ende des Längeträgers 15, der sich ebenfalls in der in Fig. 1 gezeigten Stellung befindet, bewegt, bis der untere Säulenabschnitt 5 an dem Längsträger 15 anliegt. In dieser Stellung umgreifen Überlappungsbereiche 23, die an dem Längsträger 15 gebildet sind, Einschnürungen 29, die an dem unteren Säulenabschnitt 5 gebildet sind, auf die in Fig. 3 gezeigte Weise. Folgend wird ein Laser entlang der Überlappungsbereiche 23 geführt, um eine Schweißverbindung zwischen den Einschnürungen 29 und den Überlappungsbereichen 23 zu erzeugen. Entlang zweier T-Stoße 11, die sich zwischen dem unteren Säulenabschnitt 5 und dem Längsträger 15 gebildet haben, wird ebenfalls eine Schweißverbindung zwischen dem unteren Säulenabschnitt 5 und dem Längsträger 15 hergestellt, so daß der Längsträger 15 über eine umlaufende Schweißverbindung mit dem unteren Säulenabschnitt 5 verbunden ist.

Um das Rückwandmodul 25 herzustellen, wird ein oberer Säulenabschnitt 3 aus der in Fig. 1 gezeigten Stellung auf einen unteren Querträger 9 derart gefügt, daß Überlappungsbereiche 23, die an dem oberen Säulenabschnitt 3 gebildet sind, Einschnürungen 29 umgreifen, die an dem unteren Querträger 9 gebildet sind, wie in Fig. 3 gezeigt. Folgend wird wiederum ein Laser entlang der Überlappungsbereiche 23 und der T-Stöße 11 geführt, um eine umlaufende Schweißverbindung zwischen dem oberen Säulenabschnitt 3 und dem unteren Querträger 9 herzustellen.

Anschließend wird ein oberer Querträger 19 in eine Ausnehmung 31 des oberen Säulenabschnittes 3 geführt, wobei der obere Säulenabschnitt 3 und der obere Querträger 19 folgend ebenfalls durch eine Schweißverbindung verbunden werden.

Folgend wird eine Rückwand 13 an den unteren Querträger 9, den oberen Säulenabschnitt 3 und den oberen Querträger 19 geschweißt und der untere Querträger 9 durch ein Schließteil 17 verschlossen.

Somit sind die in Fig. 1 gezeigten Komponenten 3, 9, 13, 19 zu einem Rückwandmodul 25 zusammengefügt. Es können evtl. weitere Schritte und Bauteile notwendig sein, um das Rückwandmodul 25 herzustellen, wie z. B. eine Korrosionsbehandlung, die jedoch nicht weiter beschrieben werden sollen.

Nachdem das Fahrgastmodul 27 und das Rückwandmodul 25 hergestellt sind, wie in Fig. 4 gezeigt, wird das Rückwandmodul 25 derart auf das Fahrgastmodul 27 gesetzt, daß Einschnürungen 29 des unteren Querträgers 9 zwischen Überlappungsbereichen 23 des unteren Säulenabschnittes 5 zur Anlage kommen, wie in Fig. 3 gezeigt. Anschließend wird ein Laser entlang der Überlappungsbereiche 23 und T-Stöße 11 geführt, um eine umlaufende Schweißverbindung zwischen dem unteren Säulenabschnitt 5 und dem unteren Querträger 9 herzustellen. Folgend wird die Rückwand 13 an den unteren Säulenabschnitt 5 geschweißt.

In Fig. 2 ist die auf diese Weise entstandene Säulenanordnung 1 gezeigt. Der obere Säulenabschnitt 3 und der untere Säulenabschnitt 5 sind durch ein Verbindungsstück 7 des unteren Querträgers 9 miteinander verbunden. Das Verbindungsstück 7 umfaßt einen vertikalen Verbindungsbereich 7v und einen horizontalen Verbindungsbereich 7h. Je größer der Verbindungsbereich 7h ist, um so fester ist die Verbindung zwischen dem unteren Querträger 9 und den Säulenabschnitten 3, 5.

Der untere Querträger 9 ersetzt somit mit seinem Verbindungsstück 7 einen Bereich einer herkömmlichen Säule, insbesondere einer B-Säule. Zu diesem Zweck kann der untere Querträger 9 im Prinzip jede Querschnittsform aufweisen. Bevorzugt weist der untere Querträger 9 entlang der Fahrtrichtung FR jedoch eine Länge auf, die der Länge der Säulenabschnitte 3, 5 entlang dieser Richtung entspricht. Der untere Querträger 9 kann jede geeignete Höhe, d. h. Länge in Richtung des vertikalen Verbindungsbereiches 7v, aufweisen.

Im Gegensatz zu den Querträgern, die bisher im Stand der Technik mit einer Säule, insbesondere einer B-Säule, verbunden worden sind, kann der Querträger der vorliegenden Erfindung somit nahezu jeden Querschnitt, insbesondere jeden beliebig großen rechteckigen Querschnitt, aufweisen. Insbesondere können Querträger mit einem erheblich größeren Querschnitt als im Stand der Technik verwendet werden, so daß der untere Querträger 9 als Seitenaufprallträger verwendet werden kann.

Weist der untere Querträger 9 einen Querschnitt auf, der es ermöglicht, diesen als Seitenaufprallträger zu verwenden, so steht der untere Querträger 9 vorteilhaft ein wenig über die Säulenabschnitte 3, 5 (aus dem Fahrzeuginneren kommend) hinaus, d. h. der Seitenaufprallträger erstreckt sich über die Säulenabschnitte 3, 5 hinaus in eine Knautschzone des Kraftfahrzeuges, wie in Fig. 2 gezeigt ist. Im Falle eines Seitenaufpralles steht somit zum einen ein unterer Querträger 9 mit einem großen Querschnitt zur Verfügung, wodurch eine größere Festigkeit gegeben ist, und zum anderen steht diese größere Festigkeit schon zu einem frühen Zeitpunkt des Seitenaufpralles zur Verfügung, da sich der untere Querträger 9 über die Säulenabschnitte 3, 5 hinaus in die Knautschzone des Kraftfahrzeuges erstreckt.

### Bezugszeichenliste:

- 1: Säulenanordnung
- 3: oberer Säulenabschnitt
- 5: unterer Säulenabschnitt
- 7: Verbindungsstück
- 7h: horizontaler Verbindungsbereich
- 7v: vertikaler Verbindungsbereich
- 9: unterer Querträger
- 11: T-Stoß
- 13: Rückwand
- 15: Längsträger
- 17: Schließteil
- 19: oberer Querträger
- 21: Fahrgastraum
- 23: Überlappungsbereich
- 25: Rückwandmodul
- 27: Fahrgastmodul
- 29: Einschnürung
- 31: Ausnehmung (zur Aufnahme des oberen Querträgers)

- FR: Fahrtrichtung

## Patentansprüche

1. Säulenanordnung (1) für ein Kraftfahrzeug mit einem oberen (3) und einem unteren (5) Säulenabschnitt, die jeweils aus einem Profil bestehen und miteinander fluchtend vertikal verlaufen, sowie einem den oberen Säulenabschnitt (3) mit dem unteren Säulenabschnitt (5) verbindenden verbindungsstück (7), das von einem Bereich eines horizontal verlaufenden Trägers (9) gebildet ist, wobei die Säulenabschnitte (3, 5) das Verbindungsstück (7) mit jeweils einem Überlappungsbereich (23) von oben und unten seitlich übergreifen und mit dem Verbindungsstück (7) entlang der Überlappungsbereiche verschweißt sind.

2. Säulenanordnung nach Anspruch 1, **dadurch gekennzeichnet, dass** die Säulenabschnitte (3, 5) Abschnitte einer A-, B-, C- oder D-Säule sind.

3. Säulenanordnung nach Anspruch 1 oder 2, **dadurch gekennzeichnet, dass** der Träger ein Querträger (9) ist.

4. Säulenanordnung nach Anspruch 3, **dadurch gekennzeichnet, dass** der Querträger (9) als Seitenaufprallträger gebildet ist.

5. Säulenanordnung nach Anspruch 3 oder 4, **dadurch gekennzeichnet, dass** der Querträger (9) sich über die Säulenabschnitte (3, 5) hinaus in Richtung einer Knautschzone des Kraftfahrzeuges erstreckt.

6. Säulenanordnung nach einem der Ansprüche 1 oder 2, **dadurch gekennzeichnet, dass** der Träger ein Längsträger ist.

7. Säulenanordnung nach einem der vorangehenden Ansprüche, **dadurch gekennzeichnet, dass** das Profil ein geschlossenes Profil ist.

8. Säulenanordnung nach einem der vorangehenden Ansprüche, **dadurch gekennzeichnet, dass** das Profil einen eckigen Querschnitt aufweist.

9. Säulenanordnung nach einem der vorangehenden Ansprüche, **dadurch gekennzeichnet, dass** die Säulenabschnitte (3, 5) und/oder der Träger (9) aus einem Material gebildet sind, das Stahl und/oder Aluminium und/oder Magnesium und/oder AFS (Aluminium Foam Sandwich) umfasst.

10. Säulenanordnung nach einem der vorangehenden Ansprüche, **dadurch gekennzeichnet, dass** der obere (3) und/oder untere (5) Säulenabschnitt mit dem Träger (9) durch eine Laserschweißverbindung verbunden sind.

11. Kraftfahrzeug mit einer Säulenanordnung nach einem der vorangehenden Ansprüche.

12. Kraftfahrzeug nach Anspruch 11, **dadurch gekennzeichnet, dass** das Kraftfahrzeug ein Personenkraftwagen, insbesondere ein Cabriolet, ist.

## Claims

1. A pillar assembly (1) for a vehicle, having an upper (3) and a lower (5) pillar section, each section consisting of a profile and extending vertically aligned with the other, and a connecting member (7) connecting the upper pillar section (3) to the lower pillar section (5), said connecting member being formed by a portion of a horizontally extending beam (9), wherein the pillar sections (3, 5) laterally overlap the connecting member (7) with one overlapping portion (23), respectively, from above and below, and are welded to the connecting member (7) along the overlapping portions.

2. The pillar assembly according to claim 1, **characterized in that** the pillar sections (3, 5) are sections of an A-, B-, C- or D-pillar.

3. The pillar assembly according to claim 1 or 2, **characterized in that** the beam is a crossbeam (9).

4. The pillar assembly according to claim 3, **characterized in that** the crossbeam (9) is formed as side impact beam.

5. The pillar assembly according to claim 3 or 4, **characterized in that** the crossbeam (9) extends beyond the pillar sections (3, 5) in the direction of a deformable zone of the vehicle.

6. The pillar assembly according to one of claims I or 2, **characterized in that** the beam is a longitudinal beam.

7. The pillar assembly according to one of the preceding claims, **characterized in that** the profile is a closed profile.

8. The pillar assembly according to one of the preceding claims, **characterized in that** the profile has an angular cross section.

9. The pillar assembly according to one of the preceding claims, **characterized in that** the pillar sections (3, 5) and/or the beam (9) are formed of a material including steel and/or aluminium and/or magnesium and/or AFS (aluminium foam sandwich).

10. The pillar assembly according to one of the preceding claims, **characterized in that** the upper (3) and/or the lower (5) pillar section is/are connected to the beam (9) by laser welding.

11. A vehicle comprising a pillar assembly according to one of the preceding claims.

12. The vehicle according to claim 11, **characterized in that** the vehicle is a passenger car, in particular a convertible car.

## Revendications

1. Assemblage de montant (1) pour un véhicule automobile comprenant une section de montant supérieure (3) et une section de montant inférieure (5), qui sont respectivement constituées d'un profilé et qui s'étendent en alignement mutuel verticalement, ainsi qu'une pièce de raccordement (7) reliant la section de montant supérieure (3) à la section de montant inférieure (5), laquelle pièce est formée d'une zone d'une poutre (9) s'étendant horizontalement, dans lequel les sections de montant (3, 5) recouvrent la pièce de raccordement (7) latéralement par le haut et par le bas, respectivement, par une zone de chevauchement (23) et sont soudées à la pièce de raccordement (7) le long des zones de chevauchement.

2. Assemblage de montant selon la revendication 1, **caractérisé en ce que** les sections de montant (3, 5) sont des sections de montant de type A, B, C ou D.

3. Assemblage de montant selon la revendication 1 ou 2, **caractérisé en ce que** la poutre est une traverse (9).

4. Assemblage de montant selon la revendication 3, **caractérisé en ce que** la traverse (9) se présente sous la forme d'une poutre de protection latérale.

5. Assemblage de montant selon la revendication 3 ou 4, **caractérisé en ce que** la traverse (9) s'étend au-delà des sections de montant (3, 5) dans la direction d'une zone déformable du véhicule automobile.

6. Assemblage de montant selon l'une quelconque des revendication 1 ou 2, **caractérisé en ce que** la poutre est un longeron.

7. Assemblage de montant selon l'une quelconque des revendications précédentes, **caractérisé en ce que** le profilé est un profilé fermé.

8. Assemblage de montant selon l'une quelconque des revendications précédentes, **caractérisé en ce que** le profilé présente une section transversale polygonale.

9. Assemblage de montant selon l'une quelconque des revendications précédentes, **caractérisé en ce que** les sections de montant (3, 5) et/ou la poutre (9) sont composées d'un matériau qui comprend de l'acier et/ou de l'aluminium et/ou du magnésium et/ou de l'AFS (sandwich de mousse d'aluminium).

10. Assemblage de montant selon l'une quelconque des revendications précédentes, **caractérisé en ce que** les sections de montant supérieure (3) et/ou inférieure (5) sont fixées à la poutre (9) par une soudure au laser.

11. Véhicule automobile comprenant un assemblage de montant selon l'une quelconque des revendications précédentes.

12. Véhicule automobile selon la revendication 11, **caractérisé en ce que** le véhicule automobile est un véhicule de tourisme, en particulier, un cabriolet.
